# EUROPEAN PATENT SPECIFICATION

(11) **EP 2 698 452 B1**
(45) Date of publication and mention of the grant of the patent: **09.05.2018**
(21) Application number: 13179468.7
(22) Date of filing: 06.08.2013
(51) Int. Cl.: C23C 28/04, F01D 5/28, C04B 41/00, C04B 41/52, C04B 41/90

(54) **Creep-resistant environmental barrier coatings**
Kriechfeste Umgebungssperrschichten
Revêtements formant une barrière environnementale résistant au fluage

(30) Priority: 16.08.2012 US 201213587382
(43) Date of publication of application: 19.02.2014
(73) Proprietor: General Electric Company, Schenectady, NY 12345 (US)
(72) Inventor: Das, Rupak, Greenville, SC South Carolina 29615 (US); Brittingham, Robert Alan, Greenville, SC South Carolina 29615 (US)
(74) Representative: Foster, Christopher Michael

(56) References cited:
- EP-A2- 2 698 451

## Description

### BACKGROUND OF THE INVENTION

The present invention generally relates to coating systems suitable for protecting components exposed to high-temperature environments, such as the hostile thermal environment of a gas turbine engine. More particularly, this invention is directed to a bond coat layer on a silicon-containing region of a component such as a ceramic matrix composite (CMC) and to the incorporation of one or more doping materials in the bond coat layer to inhibit creep displacement of the environmental barrier coating (EBC) when subjected to shear loading at elevated temperatures.

Higher operating temperatures for gas turbine engines are continuously sought in order to increase their efficiency. Though significant advances in high temperature capabilities have been achieved through formulation of iron, nickel and cobalt-base superalloys, alternative materials have been investigated. For example, composite materials are currently being considered for such high temperature applications as combustor liners, vanes, shrouds, airfoils, and other hot section components of gas turbine engines. Of particular interest are silicon-based composites, such as silicon carbide (SiC) as a matrix and/or reinforcing material.

In many high temperature applications, a protective coating is beneficial or required for a Si-containing material. Such coatings should provide environmental protection by inhibiting the major mechanism for degradation of Si-containing materials in a corrosive water-containing environment, namely, the formation of volatile silicon monoxide (SiO) and silicon hydroxide (Si(OH)₄) products. A coating system having these functions will be referred to below as an environmental barrier coating (EBC) system. Important properties for the coating material include a coefficient of thermal expansion (CTE) compatible with the SiC-containing material, low permeability for oxidants, low thermal conductivity, stability and chemical compatibility with the Si-containing material and silica scale formed from oxidation.

Various single-layer and multilayer EBC systems have been investigated for use on Si-containing substrates. Coatings of zirconia partially or fully stabilized with yttria (YSZ) as a thermal barrier layer exhibit excellent environmental resistance. However, YSZ does not adhere well to Si-containing materials (SiC or silicon) because of a CTE mismatch (about 10 ppm/°C for YSZ as compared to about 4.9 ppm/°C for SiC/SiC composites). Mullite (3Al₂O₃.2SiO₂), barium-strontium-aluminosilicate (BSAS; (Bal-xSrx)O-Al₂O₃-SiO₂) and other alkaline earth aluminosilicates have been proposed as protective coatings for Si-containing materials. For example, U.S. Patent No. 5,496,644 to Lee et al. and U.S. Patent No. 5,869,146 to McCluskey et al. disclose the use of mullite and U.S. Patent Nos. 6,254,935, 6,365,288, 6,387,456 and 6,410,148 to Eaton et al. disclose the use of BSAS as outer protective barrier coatings for silicon-containing substrates. In the Eaton et al. patents, BSAS barrier coatings are described as being bonded to a silicon-containing substrate with an intermediate layer (bond coat layer) that may be, among other possible materials, mullite or a mixture of mullite and BSAS.

Eaton et al. further teach that when the bond coat layer comprises silicon, the silicon preferentially reacts with oxygen to form a non-gaseous product to reduce the formation of voids that would otherwise deteriorate the bond between the silicon containing substrate and the EBC. Additionally, the resulting silicon oxide (Si02) exhibits a low oxygen permeability. Hence, the bond coat layer acts as a protective barrier that deters permeation of oxygen into the substrate layer by at least two mechanisms. The source of gas generation is eliminated and voids are prevented that would otherwise accumulate at the interface between the external coating and the silicon containing substrate.

The desired amorphous SiO₂ oxide product formed on the bond coat layer in service has a relatively low viscosity and consequently a high creep rate under shear loading. Shear loading can be imposed by the g forces attendant on high-frequency rotation of moving parts such as blades (buckets) of gas turbine engines. Displacements of EBC oxide layers with respect to the bond coat layer can result in severe EBC damage and even direct loss of EBC protection of the underlying substrate.

Prior attempts to improve the creep resistance of bond coat layers have focused on changing the composition of the bond coat layer mechanically or chemically inside the matrix. Although these methods have shown improved creep resistance in EBC systems, improved methods are still under development.

In view of the above, it can be appreciated that there are certain problems, shortcomings or disadvantages associated with the prior art, and that it would be desirable if creep could be reduced in EBC systems to at least partly overcome or avoid these problems, shortcomings or disadvantages.

### BRIEF DESCRIPTION OF THE INVENTION

The present invention provides an EBC system, a method of application and an article formed thereby suitable for reducing creep in EBC systems by incorporation of one or more doping materials in the grain boundaries of the bond coat layer to inhibit creep displacement of the environmental barrier coating (EBC) when subjected to shear loading at elevated temperatures.

According to a first aspect of the invention, an environmental barrier coating system for a silicon-containing substrate includes a bond coat layer on the silicon-containing substrate and at least one ceramic environmental barrier layer on the bond coat layer. The bond coat layer includes silicon and at least one doping material that includes a creep-resistant element. The doping material is located at grain boundaries within the bond coat layer in sufficient size and quantity to improve the creep resistance of the bond coat layer.

According to a second aspect of the invention, an article includes a silicon-containing substrate comprising and an environmental barrier coating system on the silicon-containing substrate. The environmental barrier coating system includes a bond coat layer on the silicon-containing substrate and at least one ceramic layer on the bond coat layer. The bond coat layer includes silicon and at least one doping material that includes a creep-resistant element. The doping material is located at grain boundaries within the bond coat layer in sufficient size and quantity to improve the creep resistance of the bond coat layer.

According to a third aspect of the invention, a method of applying an environmental barrier coating system on a silicon-containing substrate includes forming a bond coat layer that includes silicon on the silicon-containing substrate, doping the bond coat layer with a doping material that includes a creep-resistant element in a manner so that the doping material is located at grain boundaries within the bond coat layer in sufficient size and quantity to improve the creep resistance of the bond coat layer, and applying at least one ceramic layer on the bond coat layer.

A technical effect of the invention is the ability to produce an EBC system with improved creep resistance which allows for higher operating temperatures and longer article operating lifetimes.

Other aspects and advantages of this invention will be better appreciated from the following detailed description.

### BRIEF DESCRIPTION OF THE DRAWINGS

FIG. 1 is a schematic illustration of a cross-sectional view of a ceramic article having an environmental barrier coating system in accordance with an embodiment of this invention.
FIG. 2 is a schematic illustration of a microstructure of a bond coat layer of the environmental barrier coating system of FIG. 1 in accordance with an embodiment of this invention.

### DETAILED DESCRIPTION OF THE INVENTION

Embodiments described herein generally relate to environmental barrier coating (EBC) systems for high temperature ceramic components.

The EBC systems described herein may be suitable for use in conjunction with CMCs or monolithic ceramics. As used herein, CMC refers to silicon-containing matrix and reinforcing materials. Some examples of CMC systems acceptable for use herein can include, but should not be limited to, materials having a matrix and reinforcing fibers comprising silicon carbide, silicon nitride, and mixtures thereof. As used herein, Amonolithic ceramics refers to materials comprising silicon carbide, silicon nitride, and mixtures thereof. CMC systems and monolithic ceramics are collectively referred to herein as ceramics.

The EBC systems herein may be suitable for application to ceramic components, or simply components, found in high temperature environments (e.g. operating temperatures of about 2500°F (1370°C)), such as those present in turbomachinery, including but not limited to turbine engines such as those used in the power generating industry.

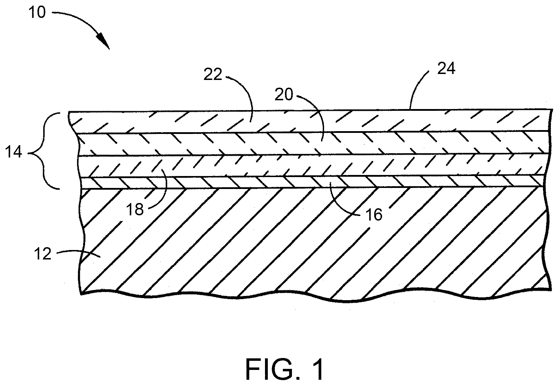

More specifically, FIG. 1 represents an article 10 as comprising an EBC system 14 on a silicon-containing substrate 12, which can include a bond coat layer 16 adjacent to the silicon-containing substrate 12, an optional silica layer 18 adjacent to the bond coat layer 16, at least one optional transition layer 20 adjacent to the bond coat layer 16 (or the silica layer 18 if present), and an outer layer 22 adjacent to the transition layer 20. The outer layer 22 forms an outermost surface 24 of the component 10. Although not all of the layers 18, 20 and 22 on the bond coat layer 16 may be necessary for individual applications, the EBC system 14 has at least one ceramic layer 18, 20, and/or 22 on the bond coat layer 16.

If the article 10 is one of the aforementioned Si-based CMC materials, a preferred composition for the bond coat layer 16 comprises elemental silicon or a silicon-containing composition, such as SiC, Si3N4, etc. Suitable materials for the transition layer 20 include, but are not limited to, silicates, alkaline-earth metal aluminosilicates and/or rare-earth metal silicates, and particularly compounds of rare-earth oxides and silicates such as barium-strontium-aluminosilicates (BSAS) and other alkaline-earth aluminosilicates. Suitable materials for the outer layer 22 include, but are not limited to, YSZ alone or with additions of rare-earth oxides capable of promoting properties of the outer layer 22. Outer layers formed of other ceramic materials are also foreseeable, for example, zirconate or perovskite materials. Examples of the above suitable materials are further described in U.S. Patent No. 5,496,644 to Lee et al., U.S. Patent No. 5,869,146 to McCluskey et al., and U.S. Patent Nos. 6,254,935, 6,365,288, 6,387,456 and 6,410,148 to Eaton et al.. The bond coat layer 16 may be applied by plasma spray processes, chemical vapor deposition (CVD) processes, electron beam physical vapor deposition (EBPVD) processes, dipping in molten silicon, sputtering processes, and other conventional application processes known to those skilled in the art. The forming of the bond coat layer 16 may be followed by a conventional heat treatment process known to those skilled in the art.

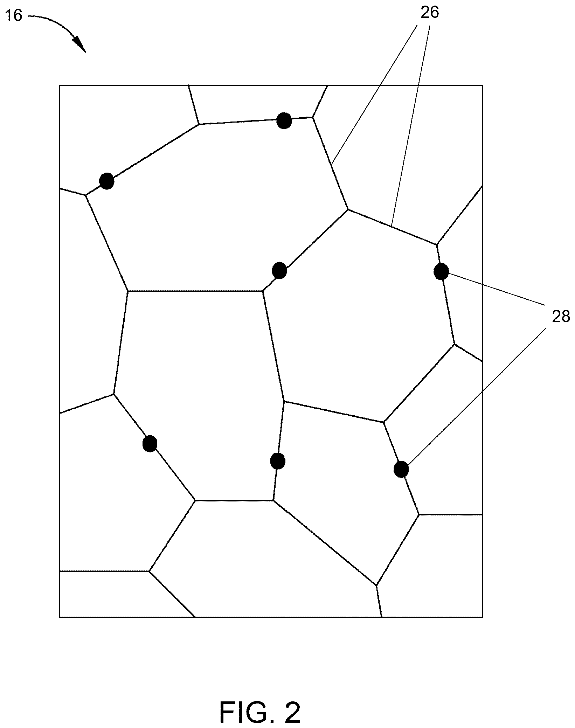

In accordance with an embodiment of the present invention, strategic proportional doping of the bond coat layer 16 is performed after the heat treatment. As used herein, the term strategic proportional doping refers to any doping technique that allows for one or more doping materials to be directly applied to grain boundaries within at least a surface region of the bond coat layer 16. For example, suitable doping processes may include ion implantation, impregnation, or liquid infiltration. The bond coat layer 16 is doped with one or more doping materials consisting entirely of one or more creep-resistant elements, comprising one or more creep-resistant elements, or comprising a compound of one or more creep-resistant elements. FIG. 2 schematically represents a microstructure of the bond coat layer 16 having doping materials 28 located on or near the grain boundaries 26 of the bond coat layer 16. It will be appreciated that FIG. 2 is for illustrative purposes only and is not to scale. The doping material 28 is deposited over a region or the entirety of the outermost surface 24 of the bond coat layer 16. The doping material 28 will likely preferentially diffuse to the grain boundaries 26 within the bond coat layer 16 as the grain boundary energy is reduced by the doping material 28. The doping material 28 accumulates at the grain boundaries 26 within the bond coat layer 16 in sufficient size and quantity to improve the creep resistance of the bond coat layer 16. A sufficient quantity of the doping material 28 located at the grain boundaries 26 is dependent on the region covered and the sticking coefficient (that is, the ratio of the average number of gas particles sticking to the surface to the average number gas particles incident on the surface) of the doping material 28 used as well as other parameters such as the temperature of the bond coat layer 16. Preferably, at least five percent by weight doping material 28 is located at the grain boundaries 26, and more preferably between about five and about fifteen percent by weight.

As used herein, creep-resistant elements of the doping material 28 are large elements, the inclusion of which has the effect of increasing the creep resistance of the bond coat layer 16. Since creep is more severe in materials that are near their melting point (or range), a preferred aspect of the invention is that elements preferred for the doping material 28 improve creep resistance by increasing the melting temperature of the bond coat layer 16. Furthermore, elements that decrease the grain boundary energy are preferable. These elements favor diffusing to the grain boundaries within the bond coat layer 16 and further improve creep resistance by pinning down dislocation clouds. Suitable elements are antimony (Sb), arsenic (As), hafnium (Hf), indium (In) and bismuth (Bi). The element should be present in the bond coat layer 16 in an amount of at least five weight percent to have the desired effect on the melting temperature of the bond coat layer 16, but not exceed about fifteen weight percent in order to avoid any negative impact on the physical properties of the bond coat layer 16. Preferably, the element is present in the bond coat layer 16 in an amount of about five to about ten weight percent, and more preferably in an amount of about seven to about ten weight percent.

Preferably, the melting temperature of the bond coat layer 16 is increased by a minimum of 20°C, and more preferably increased by a minimum of 30°C. This effect is due to steric hindrance wherein the larger metal atoms occupy more space in the matrix than the silicon atoms. The atoms of the matrix are brought closer together resulting in an increased associated cost in energy due to overlapping electron clouds. The increased energy cost thereby increases the energy required to cause melting in the bond coat layer 16. It is believed that the melting temperature of the bond coat layer 16 will generally be increased by about 30°C for every ten weight percent of the element added to the bond coat layer 16.

Additionally, the doping material 28 preferably acts as a barrier to grain boundary sliding by pinning down dislocation clouds around the grain boundaries 26. The doping material 28 acts as the obstacles to the grain boundary movements and reduces the motions of dislocations, thereby increasing the grain boundary sliding activation energy in the bond coat layer 16. The system then acts similar to the classic Cottrell Atmosphere, where the doping material 28 gets caught by the dislocations and consequently strengthens the matrix of the bond coat layer 16. This increase in grain boundary sliding activation energy substantially improves the overall creep resistance of the bond coat layer 16.

While the invention has been described in terms of preferred embodiments, it is apparent that other forms could be adopted by one skilled in the art. For example, the doping processes could differ from that described and materials other than those noted could be used. Therefore, the scope of the invention is to be limited only by the following claims.

## Claims

1. An environmental barrier coating system for a silicon-containing substrate, the environmental barrier coating system comprising:
a bond coat layer on the silicon-containing substrate, the bond coat layer comprising silicon and at least one doping material comprising a creep-resistant element, wherein the creep-resistant element is chosen from the group containing Sb, As, Hf, In and Bi, the doping material being located at grain boundaries within the bond coat layer in sufficient size and quantity to improve the creep resistance of the bond coat layer; and at least one ceramic environmental barrier layer on the bond coat layer.

2. The environmental barrier coating system of claim 1, wherein the creep-resistance element is present in the bond coat layer in the amount of five to fifteen percent by weight.

3. The environmental barrier coating system of any preceding claim, wherein the silicon-containing substrate comprises a ceramic matrix composite.

4. The environmental barrier coating system of any preceding claim, wherein the doping material is located at the grain boundaries of the bond coating layer in a quantity of at least five percent by weight.

5. The environmental barrier coating system of any preceding claim, wherein the silicon-containing substrate is a component of a gas turbine.

6. An article comprising:
a silicon-containing substrate; and
an environmental barrier coating system on the silicon-containing substrate, wherein the environmental barrier coating system is as defined in any preceding claim.

7. The article of claim 6, wherein the article is a component of a gas turbine.

8. A method of applying an environmental barrier coating system on a silicon-containing substrate, the method comprising:
forming a bond coat layer comprising silicon on the silicon-containing substrate;
doping the bond coat layer with a doping material comprising a creep-resistant element, wherein the creep-resistant element is chosen from the group containing Sb, As, Hf,,In and Bi, in a manner so that the doping material is located at grain boundaries within the bond coat layer in sufficient size and quantity to improve the creep resistance of the bond coat layer; and
applying at least one ceramic layer on the bond coat layer.

9. The method of claim 8, wherein the creep resistance element is present in the bond coat layer in the amount of five to fifteen percent by weight.

10. The method of any one of claims 8 or 9, wherein the silicon-containing substrate comprises a ceramic matrix composite.

11. The method of any one of claims 8 to 10, wherein the doping material is located at the grain boundaries of the bond coating layer in a quantity of at least five percent by weight.

12. The method of any one of claims 8 to 11, wherein the doping step is performed by ion implantation.

13. The method of any one of claims 8 to 12, wherein the silicon-containing substrate is a component of a gas turbine.

## Patentansprüche

1. Umgebungssperrschichtsystem für ein siliciumhaltiges Substrat, wobei das Umgebungssperrschichtsystem umfasst:
eine Bindeschicht auf dem siliciumhaltigen Substrat, wobei die Bindeschicht Silicium und wenigstens ein Dotiermaterial umfasst, das ein kriechfestes Element umfasst, wobei das kriechfeste Element ausgewählt ist aus der Gruppe umfassend Sb, As, Hf, In und Bi, wobei das Dotiermaterial an Korngrenzen innerhalb der Bindeschicht in ausreichender Größe und Menge angeordnet ist, um die Kriechfestigkeit der Bindeschicht zu verbessern; und
wenigstens eine keramische Umgebungssperrschicht auf der Bindeschicht.

2. Umgebungssperrschichtsystem gemäß Anspruch 1, wobei das Kriechfestigkeitselement in einer Menge von fünf bis fünfzehn Gewichtsprozent in der Bindeschicht vorhanden ist.

3. Umgebungssperrschichtsystem gemäß einem der vorstehenden Ansprüche, wobei das siliciumhaltige Substrat einen keramischen Matrixverbundstoff umfasst.

4. Umgebungssperrschichtsystem gemäß einem der vorstehenden Ansprüche, wobei das Dotiermaterial in einer Menge von wenigstens fünf Gewichtsprozent an den Korngrenzen der Bindeschicht angeordnet ist.

5. Umgebungssperrschichtsystem gemäß einem der vorstehenden Ansprüche, wobei das siliciumhaltige Substrat eine Komponente einer Gasturbine ist.

6. Gegenstand, umfassend:
ein siliciumhaltiges Substrat; und
ein Umgebungssperrschichtsystem auf dem siliciumhaltigen Substrat, wobei das Umgebungssperrschichtsystem wie in einem der vorstehenden Ansprüche definiert ist.

7. Gegenstand gemäß Anspruch 6, wobei der Gegenstand eine Komponente einer Gasturbine ist.

8. Verfahren zum Aufbringen eines Umgebungssperrschichtsystems auf ein siliciumhaltiges Substrat, wobei das Verfahren umfasst:
Bilden einer Bindeschicht, die Silicium umfasst, auf dem siliciumhaltigen Substrat;
Dotieren der Bindeschicht mit einem Dotiermaterial, das ein kriechfestes Element umfasst, wobei das kriechfeste Element ausgewählt ist aus der Gruppe umfassend Sb, As, Hf, In und Bi, auf eine solche Weise, dass das Dotiermaterial an Korngrenzen innerhalb der Bindeschicht in ausreichender Größe und Menge angeordnet ist, um die Kriechfestigkeit der Bindeschicht zu verbessern; und
Aufbringen von wenigstens einer Keramikschicht auf die Bindeschicht.

9. Verfahren gemäß Anspruch 8, wobei das Kriechfestigkeitselement in einer Menge von fünf bis fünfzehn Gewichtsprozent in der Bindeschicht vorhanden ist.

10. Verfahren gemäß einem der Ansprüche 8 oder 9, wobei das siliciumhaltige Substrat einen keramischen Matrixverbundstoff umfasst.

11. Verfahren gemäß einem der Ansprüche 8 bis 10, wobei das Dotiermaterial in einer Menge von wenigstens fünf Gewichtsprozent an den Korngrenzen der Bindeschicht angeordnet ist.

12. Verfahren gemäß einem der Ansprüche 8 bis 11, wobei der Dotierschritt durch Ionenimplantation durchgeführt wird.

13. Verfahren gemäß einem der Ansprüche 8 bis 12, wobei das siliciumhaltige Substrat eine Komponente einer Gasturbine ist.

## Revendications

1. Système de revêtement formant une barrière environnementale pour un substrat contenant du silicium, le système de revêtement formant une barrière environnementale comprenant :
une couche de liaison sur le substrat contenant du silicium, la couche de liaison comprenant du silicium et au moins un matériau dopant comprenant un élément résistant au fluage, l'élément résistant au fluage étant sélectionné dans le groupe contenant Sb, As, Hf, In et Bi, le matériau dopant étant situé au niveau de joints de grain à l'intérieur de la couche de liaison dans une taille et une quantité suffisantes pour améliorer la résistance au fluage de la couche de liaison ; et
au moins une couche de céramique formant une barrière environnementale sur la couche de liaison.

2. Système de revêtement formant une barrière environnementale selon la revendication 1, dans lequel l'élément de résistance au fluage est présent dans la couche de liaison dans une quantité de 5 à 15 % en poids.

3. Système de revêtement formant une barrière environnementale selon l'une quelconque des revendications précédentes, dans lequel le substrat contenant du silicium comprend un composite à matrice céramique.

4. Système de revêtement formant une barrière environnementale selon l'une quelconque des revendications précédentes, dans lequel le matériau dopant est situé au niveau des joints de grain de la couche de liaison dans une quantité d'au moins 5 % en poids.

5. Système de revêtement formant une barrière environnementale selon l'une quelconque des revendications précédentes, dans lequel le substrat contenant du silicium est un composant d'une turbine à gaz.

6. Article comprenant :
un substrat contenant du silicium ; et
un système de revêtement formant une barrière environnementale sur le substrat contenant du silicium, le système de revêtement formant une barrière environnementale étant tel que défini dans l'une quelconque des revendications précédentes.

7. Article selon la revendication 6, l'article étant un composant d'une turbine à gaz.

8. Procédé d'application d'un système de revêtement formant une barrière environnementale sur un substrat contenant du silicium, le procédé comprenant :
la formation d'une couche de liaison comprenant du silicium sur le substrat contenant du silicium ;
le dopage de la couche de liaison avec un matériau dopant comprenant un élément résistant au fluage, l'élément résistant au fluage étant sélectionné dans le groupe contenant Sb, As, Hf, In et Bi, de telle sorte que le matériau dopant soit situé au niveau de joints de grain à l'intérieur de la couche de liaison dans une taille et une quantité suffisantes pour améliorer la résistance au fluage de la couche de liaison ; et
l'application d'au moins une couche de céramique sur la couche de liaison.

9. Procédé selon la revendication 8, dans lequel l'élément de résistance au fluage est présent dans la couche de liaison dans une quantité de 5 à 15 % en poids.

10. Procédé selon l'une quelconque des revendications 8 ou 9, dans lequel le substrat contenant du silicium comprend un composite à matrice céramique.

11. Procédé selon l'une quelconque des revendications 8 à 10, dans lequel le matériau dopant est situé au niveau des joints de grain de la couche de liaison dans une quantité d'au moins 5 % en poids.

12. Procédé selon l'une quelconque des revendications 8 à 11, dans lequel l'étape de dopage est réalisée par implantation ionique.

13. Procédé selon l'une quelconque des revendications 8 à 12, dans lequel le substrat contenant du silicium est un composant d'une turbine à gaz.
